# EUROPEAN PATENT SPECIFICATION

(11) **EP 1 887 754 B1**
(45) Date of publication and mention of the grant of the patent: **26.12.2012**
(21) Application number: 07015353.1
(22) Date of filing: 06.08.2007
(51) Int. Cl.: H04L 29/06, G06F 21/00

(54) **A system that provides early detection, alert, and response to electronic threats**
System zur Ermöglichung der Früherkennung, Vorwarnung und Reaktion auf elektronische Bedrohungen
Système fournissant la détection précoce, alerte et réponse aux menaces électroniques

(30) Priority: 10.08.2006 IL 17742906
(43) Date of publication of application: 13.02.2008
(73) Proprietor: Deutsche Telekom AG, 53113 Bonn (DE)
(72) Inventor: Elovici, Yuval, Moshav Arugot 79864 (IL); Tachan, Gil, Omer 84965 (IL); Shabtai, Asaf, Carmei Yosef 99797 (IL)
(74) Representative: Maiwald Patentanwalts GmbH

(56) References cited:
- WO-A-2006/063052
- US-A- 5 440 723
- US-B1- 7 047 369
- US-B1- 7 080 408

## Description

### Field of the Invention

The invention is concerned with the field of network security. Specifically the invention relates to a system that provides multi-layered early detection, alert, and response to electronic threats in large wide area networks.

### Background of the Invention

Publications and other reference materials referred to herein, including reference cited therein, are incorporated herein by reference in their entirety and are numerically referenced in the following text and respectively grouped in the appended Bibliography which immediately precedes the claims.

The infrastructure of a large Internet Service Provider (ISP) or Network Service Provider (NSP) typically comprises a constantly growing network of heterogeneous routers interconnecting millions of customer-devices. This network enables the network customers to exchange data of various formats created and consumed by a plethora of applications. Recent industry reports [1] suggest that customers obtain electronic threats (eThreats) mainly from the internet. eThreats comprise a variety of attacks which can be classified into three main categories: worm-related, non-worm related (e.g., virus, Trojan), and probes (e.g., spyware, adware, identity theft, and phishing).

While methods and technology for securing networks against intrusions continue to evolve, the basic problems are extremely challenging for a number of reasons. First, hackers who perpetrate intrusions continue to find ingenious ways to compromise remote hosts and frequently make their tools publicly available. Second, the size and complexity of the Internet, including end-host operating systems, make it likely that there will continue to be vulnerabilities for a long time to come. Third, sharing of information on intrusion activity between networks is complicated by privacy issues, and while there are certainly anecdotal reports of specific port scanning methods and attacks, there is very little broad understanding of intrusion activity on a global basis [2-5, 15, 16]. Because of these challenges, current best practices for Internet security rely heavily on word-of-mouth reports of new intrusions and security holes through entities such as CERT (www.cert.org) and DSHIELD (www.dshield.org).

During the first six months of 2004, the overall number of new Windows viruses and worms grew by 450% compared to the same period in 2003 [1]. The average time between the announcement of a new vulnerability and the appearance of associated exploit code was 5.8 days. Once exploit code is made available, a new vulnerability can be widely scanned-for and exploited quickly. This means that, on average, customers have less than a week to patch all their systems on which the vulnerable application is running. The potential threat posed by a new vulnerability is worsened if the application in which the vulnerability is found is widely deployed, i.e., a Web server or database application. Recent widespread worms have illustrated the dangers of the narrow "vulnerability-to-exploit" window (e.g. Witty worm was discovered only two days after the vulnerability it exploited was made public). The ability of malicious code writers to rapidly upgrade bot (short for "robot") networks, compounds the dangers posed by such a brief vulnerability-to-exploitation window. Furthermore, as worms are becoming more sophisticated and, in many cases, remotely controlled by attackers, the potential impact on enterprises and customers is significant. Once a new vulnerability is announced, organizations must introduce security countermeasures before an exploit is made available, or risk having their systems exploited.

In addition to the worm-related attacks which propagate in the network in various ways, other types of malicious codes are propagated manually and in many cases the malicious code is actually an unobtrusive information-gathering probe.

As a case in point, Trojans are increasingly being installed via malicious Web sites. They exploit browser vulnerabilities that allow malicious code authors to download and execute the Trojans with little or no conscious user interaction. Trojans appear to serve some useful purpose, which encourages users to download and run them, but actually carry a destructive function. They may masquerade as legitimate applications available for download from various sources or be sent to an unsuspecting user as an email attachment. Since Trojans do not replicate like viruses and worms (although they may be delivered by worms) they typically do not receive as much media attention. However, if they are executed on a computer they can be extremely destructive, with payloads ranging from unauthorized export of confidential data to surreptitious reformatting of hard drives.

The threatening situation described above has been amplified in part by increased global terrorism and criminal activities on the Web in recent years. Today the Web is used as an enabling platform for a plethora of illegal activities ranging from credit card fraud, through identity phishing, to transferring money and orders. Web application attacks are expected to increase in the near future; targeted attacks on firewalls, routers, and other security devices protecting users' systems will be a growing security concern; sophisticated methods of control and attack synchronization that are difficult to detect and locate will be used, and finally, more attempts to exploit mobile devices will be documented.

The eThreat posed to a NSP is especially significant because they are huge, service-oriented companies with tens of millions of customers, operating in an open networked environment which blends a plethora of technologies. This situation makes the NSP especially susceptible to eThreats propagated across networks. Thus, it calls for a significant investment in developing a comprehensive conceptual model that will enable the detection and prevention of both known and new forms of eThreats.

Many different types of defense mechanisms have been proposed for dealing with the above described eThreats. Among these mechanisms are the following:

### - Data Mining Approach: The Minnesota Intrusion Detection System (MINDS).

Data Mining has been used extensively in recent years as an enabling technology for intrusion detection applications [7, 8]. The overall goal for MINDS [9, 10] is to be a general framework and system for detecting attacks and threats to computer networks. Data generated from network traffic monitoring tends to have very high volume, dimensionality and heterogeneity. Coupled with the low frequency of occurrence of attacks, this makes standard data mining algorithms unsuitable for detecting attacks. In addition, cyber attacks may be launched from several different locations and targeted to many different destinations, thus creating a need to analyze network data from several locations/networks in order to detect these distributed attacks. The first step in MINDS includes constructing features that are used in the data mining analysis. Basic features include source IP address, source port, destination IP (internet protocol) address, destination port, protocol, flags, number of bytes, and number of packets. Derived features include time-window and connection-window based features. Time window based features are constructed to capture connections with similar characteristics in the last t seconds, since typically DOS and scanning attacks involve hundreds of connections. After the feature construction step, the known attack detection module is used to detect network connections that correspond to attacks for which the signatures are available, and then to remove them from further analysis. Next, the data is fed into the MINDS anomaly detection module that uses an outlier detection algorithm to assign an anomaly score to each network connection. A human analyst then has to look at only the most anomalous connections to determine if they are actual attacks or other interesting behavior. The MINDS association pattern analysis module summarizes network connections that are ranked highly anomalous in the anomaly detection module. The human analyst provides a feedback when analyzing created summaries of detected attacks and deciding whether these summaries are helpful in creating new rules that may be further used in the known attack detection module.

### - The Signature-based Approach: Bloom Filters

Bloom filters [11-13] were used to build a system that scans Internet traffic. Packets enter the system and are processed by Internet Protocol (IP) wrappers. The data in the packet goes to the input buffer and then flows through the content pipeline. As the packet passes through the pipeline, multiple Bloom engines scan different window lengths for signatures of different lengths. Data leaves the content pipeline, flows to the output buffer, streams through the wrappers, and then packets are re-injected into the network. If a Bloom engine detects a match, a hash table is queried to determine if an exact match occurred. If the queried signature is an exact match, the malicious content can be blocked and an alert message is generated within a User Datagram Protocol (UDP) packet, informing a network administrator, an end-user or an automated process that a matching signature has been detected.

### - Dynamically Reconfigurable Hardware: Field Programmable Gate Arrays (FPGA)

A platform has been implemented that actively scans and filters Internet traffic for Internet worms and viruses at multi-Gigabit/second rates using the Field-programmable Port Extender (FPX) [17-21]. Modular components implemented with Field Programmable Gate Array (FPGA) logic on the FPX process packet headers and scan for signatures of malicious software (malware) carried in packet payloads. FPGA logic is used to implement circuits that track the state of Internet flows and search for regular expressions and fixed-strings that appear in the content of packets.

### - Sequential Hypothesis Testing and Credit-based Connection Rate Limiting (CBCRL): a Worm Detection System

The application of mathematical modeling can be helpful for better defending systems against malware attacks [27, 30, 35].

### - Port Scanning Detection: The DIB:S/TRAFEN (The Dartmouth ICMP BCC: System Tracking and Fusion Engine)

Port scanning detection [26] is an effective technique for providing defense against port scanning attacks which attempt to discover communication channels which can be penetrated and exploited. As a case in point, the idea underlying DIB:S/TRAFEN [25] is that routers send "blind carbon copies" of ICMP (internet control message protocol) type 3 messages to a Collector who analyzes the messages, looking for signatures of worm scanning and correlating observations to track worm infections. The technique employs a simulator system capable of simulating worm infections and collecting the ICMP 3 messages in a tcpdump file for further analysis. For the collection of the ICMP destination unreachable messages, the system relies on Internet routers to forward copies of those messages that they generate to a central collector. From there, they are distributed to an array of analyzers that all report back to a Correlator system. The analyzers generate reports of significant behavior and create a set of identifying characteristics. Based on those characteristics the Correlator determines whether an active worm is propagating by comparing reports received from other analyzers. Information provided by the ICMP protocol has been employed by other security applications as well [23, 24].

### - Static Analysis of Executables: The SAFE System

SAFE is a virus detector resilient to code obfuscations [28]. To detect malicious patterns in executables, an abstract representation of the malicious code is built. The abstract representation is the "generalization" of the malicious code, e.g., it incorporates obfuscation transformations, such as superfluous changes in control flow and register reassignments. Similarly, an abstract representation of the executable in which one is trying to find a malicious pattern must be constructed. Once the generalization of the malicious code and the abstract representation of the executable are created, it is possible to detect the malicious code in the executable. The malicious code is generalized into an automaton with uninterrupted symbols. Uninterrupted symbols provide a generic way of representing data dependencies between variables without specifically referring to the storage location of each variable. A pattern-definition loader component takes a library of abstraction patterns and creates an internal representation. These abstraction patterns are used as alphabet symbols by the malicious code automaton. An executable loader component transforms the executable into an internal representation, here the collection of control flow graphs (CFGs), one for each program procedure. An annotator component inputs a CFG from the executable and the set of abstraction patterns and produces an annotated CFG, the abstract representation of a program procedure. The annotated CFG includes information that indicates where a specific abstraction pattern was found in the executable. The annotator runs for each procedure in the program, transforming each CFG. The detector component computes whether the malicious code (represented by the malicious code automaton) appears in the abstract representation of the executable (created by the annotator). This component uses an algorithm based upon language containment and unification. Another application of static code analyses for detecting buffer overflow attacks is described in [29].

### - Vulnerability Driven Network filters: The Shields System

Software patching has not been effective as a first-line defense against large-scale worm attacks, even when patches have long been available for their corresponding vulnerabilities. Generally, people have been reluctant to patch their systems immediately, because patches are perceived to be unreliable and disruptive to apply. Shields [31-34] uses vulnerability-specific, exploit-generic network filters installed in end-systems once vulnerability is discovered, but before a patch is applied. These filters examine the incoming or outgoing traffic of vulnerable applications, and correct traffic that exploits vulnerabilities. Shields are less disruptive to install and uninstall, easier to test for bad side effects, and hence more reliable than traditional software patches. The architecture of Shields functions as follows: Whenever a new Shield policy arrives or an old policy is modified, the Policy Loader integrates the new policy with an existing specification (Spec) if one exists, or creates a new one otherwise. The Shield policy is expressed in the Shield policy language. Policy loading involves syntax parsing, and the resulting syntax tree is also stored in the Spec for the purpose of run-time interpretation of shielding actions. When raw bytes arrive at Shield from a port, an Application Dispatcher unit is invoked to determine which Spec to reference for the arrived data, based on the port number. The Application Dispatcher forwards the raw bytes and the identified Spec to a Session Dispatcher unit for event and session identification. On obtaining the locations of the session ID, message type, and message boundary marker from the corresponding Spec, the Session Dispatcher extracts multiple messages (if applicable), recognizes the event type and session ID, and then dispatches the event to the corresponding state machine instance. There is one state machine instance (SMI) per session. Given a newly-arrived event and the current state maintained by the corresponding session state, the SMI consults the Spec regarding which event handler to invoke. Then the SMI calls a Shield Interpreter unit to interpret the event handler. The Shield Interpreter interprets the event handler, which specifies how to parse the application-level protocol payload and examine it for exploits. It also carries out actions like packet-dropping, session tear-down, registering a newly-negotiated dynamic port with Shield, or setting the next state for the current SMI.

The academic literature reviewed above suggests that there exist a plethora of approaches, models and tools for addressing the problem of eThreats. Nevertheless, each initiative described above provides a partial solution to a very small part of a particular problem. They do not target all of the major facets of the eThreat protection challenge. Specifically: MINDS deals with threats to computer networks only and does not protect devices such as PCs, cell-phones, etc. It does not provide detection in real-time, and protection against polymorphism/metamorphism. FPGA and Bloom Filters provide a solution focused on throughput performance criteria, but can only deal with certain kinds of known eThreats that can be identified by their hashing or regular expression signature. Shields and the methods of Sequential Hypothesis Testing/credit-based connection rate limiting address only worm propagation, whereas SAFE addresses only virus threats. Finally, DIB:S/TRAFEN deals with only Port Scanning Detection.

All in all, it is clear that the above initiatives do not provide an overall satisfactory solution to the eThreat problem. The problem of eThreats has a dynamic nature, with new kinds of threats emerging and old threats evolving into different kinds of threats. For example, adware, spyware, and identity theft by way of phishing are "younger" threats compared to the virus threat and their impact has been felt substantially only in the last two to three years. Considering the fact that content on the Web cannot be effectively regulated, the eThreat challenge posed by crackers, terrorists, criminals, etc. is overwhelming.

US 5 440 723 discloses a periodic monitoring of the data processing system for anomalous, potentially virus-like behavior, automatic scanning for occurrences of known viruses, and removal of any which are found to be present, deployment of decoy programs to capture virus samples, extraction of a viral signature from the invariant portion(s) and the addition of the signature to a signature database, informing neighboring data processing systems on a network of an occurence of a viral infection, generation of a distress signal. The data processing system are user computers.

It is therefore a purpose of the present invention to provide a system that offers a flexible and adaptive security platform against eThreats in NSP networks.

Further purposes and advantages of this invention will appear as the description proceeds.

### Summary of the Invention

The invention is a computer system that provides early detection alert and response to electronic threats in large wide area networks as defined in independent claim 1.

All characteristics and advantages of the invention will be further understood through the following illustrative and non-limitative description of preferred embodiments thereof, with reference to the appended drawings, wherein the use of the same reference numeral in different figures identifies like parts.

### Brief Description of the Drawings

- Fig. 1 shows the overall conceptual framework of the system of the invention;
- Fig. 2 shows the five layers of protection supplied by the system of the invention;
- Fig. 3 shows a schematic description of the architecture of the Anonymity, Privacy and Secrecy Module;
- Fig. 4 shows a schematic description of the architecture of the Known eThreat Handler Module;
- Fig. 5 shows a schematic description of the architecture of the Data Stream Manager Module;
- Fig. 6 shows a schematic description of the architecture of the New eThreat Detection Module;
- Fig. 7 shows a schematic description of the Protection & Feedback Agent;
- Fig. 8 shows a schematic description of the architecture of the Collaborative eThreat Recognition Module;
- Fig. 9 shows a schematic description of the architecture of the Expert Group Feedback Manager Module;
- Fig. 10 schematically shows the time-lined trees of the propagation of a file from IP₁ to IP₂ as listed in the logs that have been collected and made available to Attack Trace-Back module; and
- Fig. 11 shows a schematic description of the architecture of the Risk Assessment Module.

### Detailed Description of Preferred Embodiments

The invention is a computer system that provides multi-layered early detection alert and response to electronic threats in large wide area networks. The system of the invention harnesses the processing power of dedicated hardware, specialized servers, distributed personal computers connected to the network, and the human brain to provide multi-layered early detection, alarm and response to eThreats.

Generally speaking there are two types of eThreats:
- Known eThreats for which the components of the system of the invention have already acquired a distinct signature; and
- Unknown (New) eThreats which the components of the system of the invention have yet to encounter and classify, and for which the system needs to generate a distinct signature.

Known eThreats are identified and blocked in real-time, using lightweight dedicated hardware devices capable of detecting eThreat signatures at a rate of multi-Gigabits/sec. All of the network service provider (NSP) customers' Internet traffic flows through such devices; which are deployed at appropriate network locations.

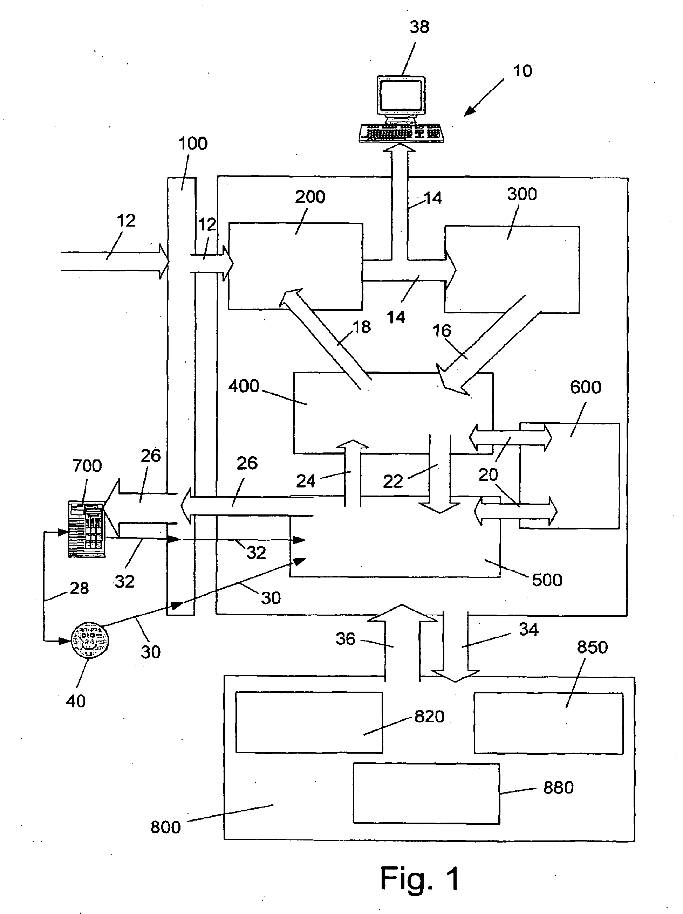

Another module constantly monitors the data traffic and searches for new eThreats. This module does not work in real-time since evidence may need to be accumulated over time and since some modern algorithms are very computationally intensive: Other modules work together with these modules to help to cope with the enormous amount of data traffic. These modules focus the computational efforts on the more "important" parts of the network, using the theories of Complex and Social Networks. The conceptual framework of the system **10** of the invention, which comprises ten major modules, is shown in Fig. 1. Each module shown in Fig. 1 is comprised of several components that are not shown in this figure, but the more important of which will be described in more detail hereinbelow.

The incoming internet data stream **12** encounters the Anonymity, Privacy and Secrecy (APS) Module **100.** This is a virtual module; hence it does not include specific hardware or software components. Its several components are distributed throughout the architecture. Their purpose is to ensure that the anonymity, privacy and secrecy of all the Network Service Provider's clients are preserved while enabling the architecture to perform its function.

Anonymity is preventing the association of any personal data with a specific client. In the architecture of the invention, anonymity is preserved in the following ways: Firstly, the Protection and Feedback Agent **700** does not use a user's name or personal data during authentication with the server. Secondly, the captured Internet traffic is stripped of any personal, identifying information before being processed. Thirdly, no data that may link a user to any specific piece of traffic is stored.

Privacy is preventing third parties from discovering any of a client's identifiable information. Privacy is achieved by removing private user's details captured by the Agent **700** before forwarding the user's packets to other parts of the system.

Secrecy is preventing third parties from discovering confidential information. Secrecy is achieved by encrypting data flow between the various modules of the system **10** and requiring both communicating modules to authenticate prior to any communication.

The APS module **100** includes the following components distributed through other components of architecture **10**:
- Sanitization components are devoted to removing and identifying data carrying personal information. These components reside in the Data Stream Manager Module (DSM) **300** that extracts data from the network and in the Protection and Feedback Agent **700** that transfers data from client's devices.
- (b) A Secure Network Connection Component resides within every module of system **10** and enables secure encrypted communication. All modules in the framework send information only through this component.

The responsibility of the Known eThreat Handler Module (KEHM) **200** is to detect and remove all known to eThreats that have been detected in the inbound internet data stream **12.** The KEHM **200** works in real-time and has to cope with high-speed internet traffic and to block or disarm all threats before they reach the NSP's client's computers. Many kinds of real time information are also generated by KEHM and are reported to any of the other components of architecture **10** that can make use of that information. KEHM **200** is updated by the New eThreat Detection Module **400** with the signatures of new eThreats. Input to the KEHM comprises the inbound data stream **12** or eThreat signatures **18** recognized by other modules such as the New eThreat Detection Module **400**. The output is the outbound clean data stream **14**, which ultimately arrives at the target computer **38**.

The Data Stream Manager Module (DSM) **300** receives the clean internet data stream **14** from the Known eThreat Handler Module **200** and is responsible for intercepting the parts of the internet data stream **16** that should be sent to the New eThreat Detection Module **400** for processing.

The New eThreat Detection Module **400** is one of the most important modules of system **10**. It is responsible for collecting information from various sources and processing that information using different techniques. It is constructed with openness and scalability in mind in order to keep the system adaptive to future requirements, i.e. the module **400** can easily be updated with new plug-ins providing the detection power of new algorithms or providing new functionality. The New eThreat Detection Module **400** is not connected directly to the internet data stream and does not process information in real time. The Data Stream Manager Module (DSM) **300** will focus the computational effort of module **400** "providing" it with only part of the internet data stream **16**. Upon new eThreat recognition a Signature Builder component will be activated. At the end of this process the Known eThreat Handler Module **200** and the Collaborative eThreat Recognition Module **500** will be updated with a new signature **18,22** thereby instantly protecting the entire network and the client's PCs from future attacks.

The Protection & Feedback Agent **700** is an optional module that each client **40** has the right to choose to install on his or her computer. The client **40** is also able to choose which of the various functionalities of the Agent **700** should be enabled, for example it might be decided not to deploy a dynamic sand-box..

This module has the following responsibilities:
- To automatically clean (following user confirmation) the client's computer of any new eThreat that has arrived during the time between when it first infiltrated the network and the response time of architecture **10.**
- To monitor user-content interaction **28**.
- To deploy a dynamic sand-box to safely open and test incoming files.
- To deploy various sniffers to provide architecture **10** with automatic feedback **32** and to support the functionality of components associated with the DSM **300.**
- To transfer feedback **30** from client **40** to the Collaborative eThreat Recognition Module **500.**
- To display warning and other messages to the client.
- To do all of the above without compromising the customer's anonymity, privacy, and the secrecy of the data.

The Collaborative eThreat Recognition Module **500** receives feedback **30,32** from both the Protection & Feedback Agent **700** and the End Users **40.** In some cases the feedback will be subjective and in other cases will not be correct at all. Therefore this module preprocesses the feedback gathered from various sources (users and Agents) and feeds objective information **24** to the New eThreat Recognition module **400.** Additionally the Collaborative eThreat Recognition Module **500** keeps all Protection & Feedback Agents **700** up to date by forwarding various kinds of information **26** such as: new eThreat signatures, configuration update, software updates, warnings, etc.

The System Control Center **800** is comprised of three modules. The Control Center receives data **34** from the other modules and return configuration and feedback data **36.**

The responsibility of the Expert Group Feedback Manager Module **820** is to collect feedback from the human expert group responsible for running the architecture. In some or all cases the expert group will be asked to confirm whether or not a data stream contains a new eThreat. They will be presented with all supporting information and tools to make that determination. Using this module the experts could also set the threshold that determines when to automatically treat a potential eThreat as an actual eThreat and when to ask for confirmation before the final determination is made.

Also present in Control Center **800** are the Attack Trace-Back Module **850,** which is responsible for helping in analyzing and displaying attack patterns, contamination rate, and trace-back information and the Risk Assessment Module **880,** which is responsible for calculating and displaying the threat assessment of various eThreats in real time.

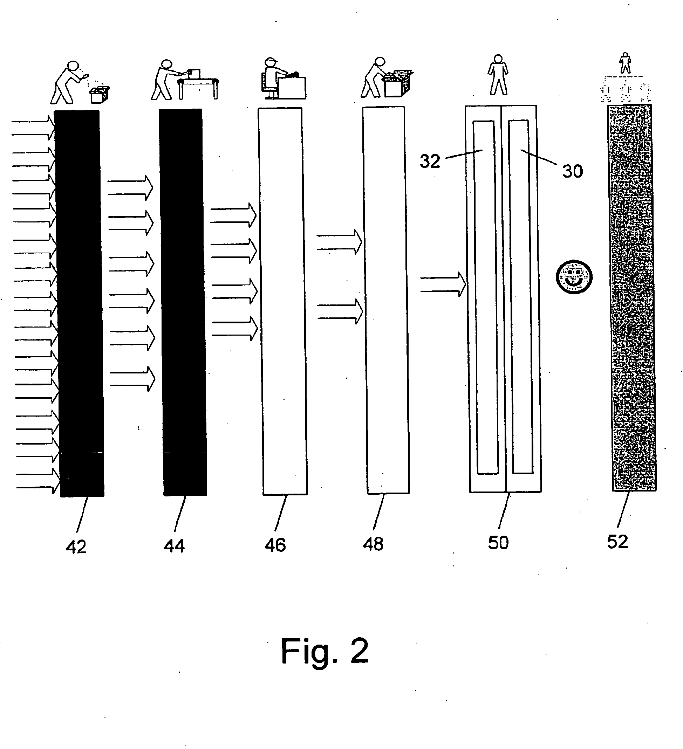

The system **10** described above with reference to Fig. 1 effectively creates several protection and detection layers. Fig. 2 shows the five layers of protection supplied by the system **10** of the invention. eThreats must overcome all of these layers in order to be of any real threat to the NSP network users.

The five layers of protection provided by the system **10** of the invention are shown in Fig. 2 are:
1. Known eThreat Protection Layer **42 -** Implemented via the Known eThreat Handler module **200.** All of the internet traffic in the NSP network flows through this layer. No known eThreat can pass this layer.
2. New eThreat Detection Layer **44 -** Implemented via the New eThreats Detection Module **400** that uses different techniques in order to identify new eThreats.
3. Expert Analysis Layer **46 -** This is a virtual layer comprising the expert managing functions located in the Control Center **800.** This layer receives conflict resolution requests from the previous layers and other pieces of information. Its purpose is to catch more stealthy new eThreats that have slipped through layer **44.**
4. Dynamic Sandbox Protection Layer **48 -** This optional layer is implemented via the Protection & Feedback Agent **700** and is located at all the individual clients that have chosen to install it. As a downloaded file opens or executes, this layer may take action depending on its configuration, the file type, and events triggered by the action applied to the file. Different limitations will be imposed on different file types and different kinds of utility programs, thereby protecting against many of the new eThreat attacks. In some cases, the outcome of such file-openings or executions will be reported to other modules of system **10** along other kinds of information gathered. This layer can also warn clients when they are about to run programs that are not known to system **10** and for which no positive feedback has been received from other users.
5. Collaborative Detection & Protection Layer **50 -** Implemented via the Protection & Feedback Agent **700.** Currently when a NSP customer is attacked by an eThreat there is only loss to him and no profit to him or anyone else. The aim of Layer **50** is to change this situation either by automatic feedback **32** by the Agent **700** or by explicit user feedback **30.** The system will know when a new eThreat has emerged and will automatically protect the entire network from that eThreat. Thereby even a very small number of attacked users can alert and help protect tens of millions of other clients from a new eThreat.

In Fig. 2, the arrows between layers symbolically represent the number of eThreats and the "happy face" represents the fact that no eThreats are able to get through to the bulk of the NSP's clients **52.**

Having briefly described the main features of the various modules of the system **10** of the invention by referring to Fig. 1, a more detailed description of the major modules and their subordinate components will now be given. This description includes a figure depicting the conceptual architecture and subordinate components comprising each module, the major interactions of the components amongst themselves and between the components of other relevant modules, a list of possible inputs and outputs accepted as requests and provided in response by each module, and an implementation scheme outlining relevant algorithms, protocols, software packages, and dedicated hardware devices, etc. which serve as the building blocks that transform the architecture into an operational, alert and robust system.

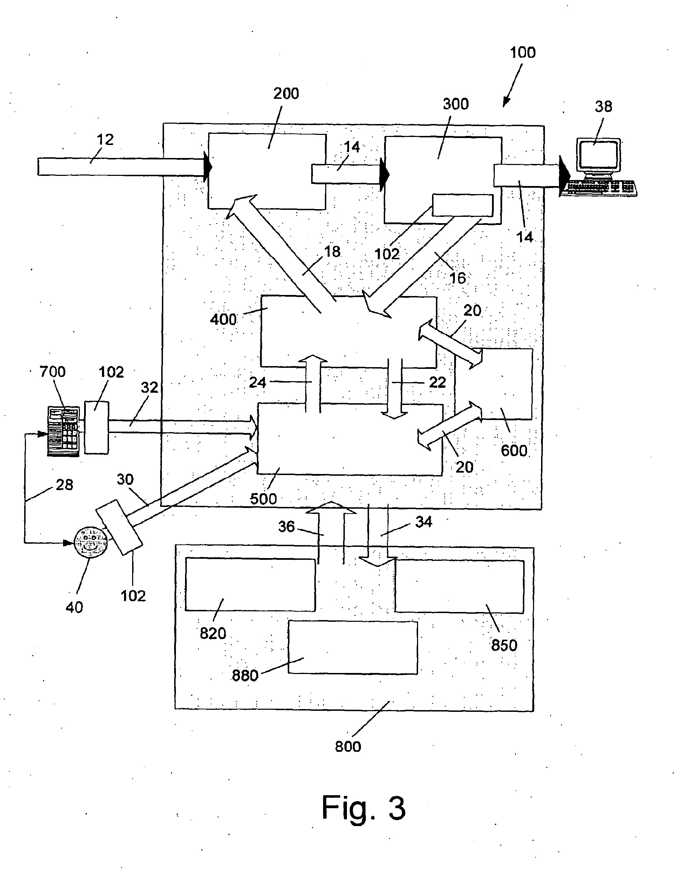

The Anonymity, Privacy and Secrecy Module **100** is a virtual one. There is no specific hardware or software component that can be called the Anonymity, Privacy and Secrecy Module **100,** instead, its functionality is embedded into the various system components. A schematic description of the Anonymity, Privacy and Secrecy Module **100** is shown in Fig. 3.

Two major components of the Anonymity, Privacy and Secrecy Module **100** are the Secure Network Connection, which are implied by the double arrows that indicates encrypted connections (as opposed to the dark-headed double arrows that indicate unencrypted data), and the Sanitizer component **102**.

The Secure Network Connection component is implied in Fig. 3. It exists internally in every module that communicates with other modules in the architecture. The communication is via an encrypted connection and the Secure Network Connection is in charge of preserving the secrecy of transported information. The "conservative" assumption in this regard is that any packet sent over the network is suspected of enabling eavesdropping or being maliciously manipulated by a passive or active attacker correspondingly.

Any module in the system shown in Fig. 1 can only send information over the network through the Secure Network Connection component. This constraint assures that data is only delivered to destinations which have been successfully validated as belonging to the system of the invention. Therefore no eavesdropping is computationally feasible.

The connections on the pipeline of data **12,14** from the internet through the Known eThreat Detection Module **200** and Stream Manager Module **300** to the target computer **38** are the only plain (i.e., not through the Secure Network Connection component) connections that are shown in Fig. 3. These connections do not require encryption because the data that flows through them is regular internet traffic.

Data flows through the Secure Network Connection component in two directions: (1) Inbound traffic is received by the component from another Secure Network Connection component and is delivered to the Storage Sanitizing component. Outbound traffic is a sanitized data stream, received from the Storage Sanitizing component, which is conveyed to some other distant Secure Network Connection component over the network.

The implementation scheme of the Secure Network Connection Component involves two stages:
- Initiation: Both parties must be verified to be legitimate. The initiation process must also generate symmetric keys for the next stages and comply with the PFS (Perfect Forward Secrecy) property. To accomplish this SSL (Secure Sockets Layer) with both client and server side certificates may be used, as well as any tailored solution that ensures the required properties. A well-known, trusted and mature solution is preferred in this regard. In case of certificates being required, a strong hash function such as SHA-256 (or stronger) must be used, since MD5 and SHA1 have known weaknesses.
- Encryption: The connection must be encrypted with a high grade security cipher. Examples are the 5 AES finalists, in particular Rijendal, and the widely known Blowfish. RC4 has known weaknesses and should be avoided.

The Sanitizer Component **102** is responsible for the privacy and anonymity of the NSP clients. The function if this module is to remove any identifying details regarding private information that are not strictly required for the process of detecting and removing eThreats. The Sanitizer needs to balance between removing enough forbidden details from the stream and retaining sufficient information to allow efficient detection and removal of eThreats by the receiving modules.

The Storage Sanitizing Component **102** is present in the Stream Manager Module **300** and in the Protection & Feedback Agent **700.** These locations are chosen because module **300** extracts information from the network data stream and module **700** extracts information from client's devices. Thus these are the only two modules in system **10** that have direct access to sensitive information that needs to be sanitized.

The input to the Sanitizer **102** is the transport stream from either the Stream Manager Module **300** or the Protection & Feedback Agent **700.** Its output is relayed to the Secure Network Connection component.

The operation scheme behind the Sanitizer Component **102** is a sequential application of filter algorithms. Each algorithm recognizes a specific pattern or a class of patterns of sensitive data. This data is either stripped or manipulated in a way that removes any trail to the original data. The algorithm filters may be context sensitive (e.g. protocol, stream headers or previous data) or context free. Data that is removed by the sanitizing filter is a soft collection and may be extended at runtime. Hard data items that can not be removed are Client's user names, passwords, Names, E-mail addresses, IP addresses, Visited URLs. Phone numbers and file names. Data may be abstracted in a one-way fashion instead of removed if this helps the system accuracy.

In order to identify the specified fields, that should be removed or transformed, the filter must recognize certain protocols. For ease of implementation, not all protocol handlers must be implemented, and heuristics must exist for unknown protocols. Protocols that are absolutely necessary for implementation of the sanitizer **102** are any protocols being used by more that 10% of the clients. A non-complete set of examples of such necessary protocols is: DNS, HTTP, FTP, ed2k, BitTorrent, and pop3/smtp. A set of additional protocols that might be necessary includes IRC, IMAP, and RTSP.

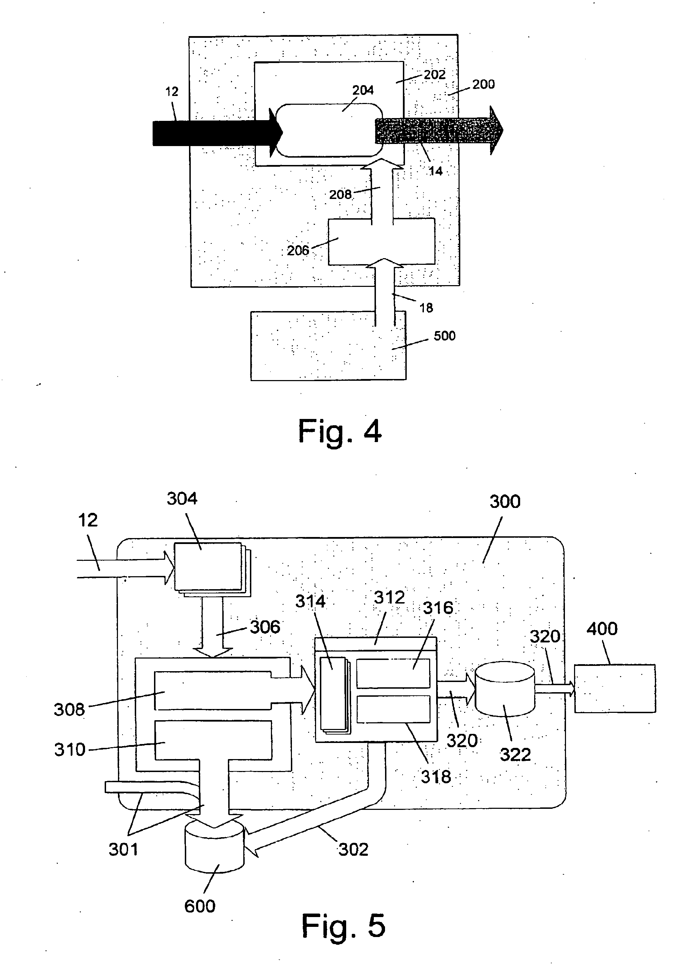

The main purpose of the Known eThreat Handler Module **200** is to detect and clean all the known (to the system) eThreats in the incoming Internet data stream **12.** This is a physical module that works in real-time and must be placed in the NSP infrastructure. The overall architecture of the Known eThreat Handler Module **200** is shown in Fig. 4.

The Module **200** includes a hardware interface **202,** Recognition Component **204** and eThreat Signature Adaptor **206.**

The main input of the Recognition Component sub-module **204** is the incoming Internet data traffic **12.** The Recognition Component **204** looks for a match between the signatures of known eThreats and the stream of Internet packets. If a match is detected and the Recognition Component identifies an eThreat, then the packet will not be forwarded or will be dealt with in another manner. Otherwise the cleaned Internet data stream **14** is forwarded out of the module **200.** Additional input **208** to the Recognition Component **204** is received from the eThreat Signature Adaptor **206,** which contains signature updates for eThreats written in the format used in the Recognition Component **204.** The Recognition Component **204** must support high-speed processing of the incoming Internet data stream **12.**

The system **10** of the invention enables detection and identification of new eThreats by using either signatures received from the New eThreat Detection Module **400** or explicit feedback 36 received from the Expert Group Module **820.** The eThreat Signature Adaptor **206** is responsible for transforming the recognized eThreat-signature (received from Module **400** or Module **820)** to hardware-specific format and to reprogram the dedicated hardware with the new signature.

The major components of the Data Stream Manager (DSM) Module **300** are shown in Fig. 5. This module receives a "clean" Internet data stream **12** from the Known eThreat Handler Module **14** It is responsible for extracting files **320** from Internet data stream **14** and sending them to the New eThreat Detection Module **400.** It will also store temporal data on files and IP behavior in the Storage Manager **600.** This is a physical module.

A set of hardware or software filters **304** examine packet headers and filters out traffic **14** (Fig. 1) that has no potential to assist with eThreat detection. This may include traffic from 100% percent secure and trusted servers or protocols that are not used for attacks.

Traffic **306** that has potential to assist with eThreat detection is sent to the Application Layer Data Stream Reconstruction component **308,** which is responsible for reconstructing communications up to the application layer. It must support basic protocols such as HTTP and FTP. Other protocols can be added if necessary. This application layer data stream will be later processed by the Information Extraction component **312** before it can be packed and sent to the New eThreat Detection Module **400.**

The Communication Related Information Summary component **310** in the Storage Manager module 600 may optionally store records on selected pieces of communication that have passed the packet filters.

The Information Extraction Module **312** is the main component of Data Stream Manager **300.** It is responsible for extracting files contained in traffic forwarded by the Known eThreat Handler Module **200.** High level filters **314** are responsible for passing only new, previously unobserved, files to the New eThreat Detection Module **400.** This can be done by managing a local hash-table (on the DSM module) or by querying the Storage Manager **600.** In Fig. 5, the Information Extraction component **312** is shown to contain two subcomponents an SMTP files extractor **316** and a HTTP files extractor **318.** This component can also forward to the New eThreat Detection Module **400** communications that are not identified as files since it might be necessary to detect and identify Internet worms that exploit application vulnerabilities and are not transferred by the means of files, e.g. SQL Slammer. The file related output **302** of the Information Extraction component **312** that is sent to the Storage Manager Module **600** includes: hash; timestamp; payload type, e.g. file; and the ID of the DSM.

The File Buffer **322** is a limited size queue that stores files packaged by the Information Extraction component **312** until they are requested by the New eThreat Detection Module **400** or overwritten by newer files. This is a simple FIFO buffer but could be a parameterized queue able to support sudden priority changes (for example in case of an outbreak.

The DSM modules **300** are physical modules that are deployed at critical network positions. The DSM **300** is deployed on the ISP level and handles traffic originating at central users. The number and exact deployment of the DSMs **300** are the subject of another patent application Attorney's Docket No. 20538/06 of the same Applicant, the description of which, including publications referenced therein, is incorporated herein by reference. Some of the DSM's tasks, i.e. gathering temporal information and later forwarding it to the Storage Manager **600,** can be handled by the Protection & Feedback Agent **700.**

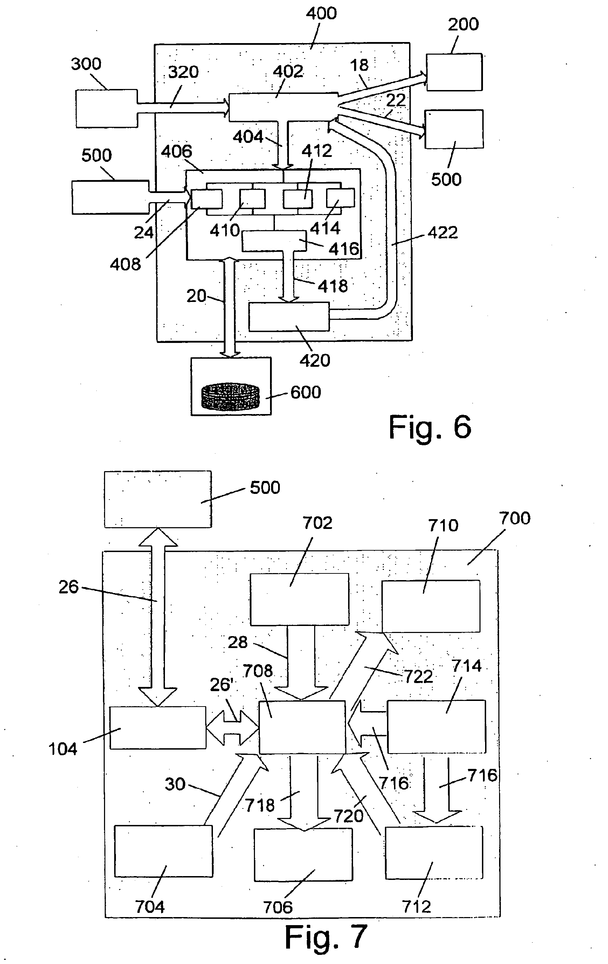

The New eThreat Detection Module **400,** whose architecture is shown in Fig. 6, is one of the most important modules in the system of the invention. It is responsible for collecting and analyzing information from a variety of sources by employing a collection of scientific methodologies. This module is not directly connected to the Internet data stream and therefore does not process information in real time. Instead the Data Stream Manager **300** will forward only the part of the Internet data stream (as files) that should be further processed. Upon recognition of a new-eThreat, the Signature Builder component **420** will be activated. Finally, the Known eThreat Handler module **200** and the Collaborative eThreat Recognition module **500** will be updated with the new signature, thereby instantly protecting the entire network and the clients' personal computers from future attacks of this type.

The following is a description of the various components which comprise the New eThreat Detection Module **400:**
- The Unknown eThreats processor **402** is responsible for controlling the whole detection process of new eThreats. The input of this module is a collection of files **320** which are transferred from the Data Stream Manager **300** to the detection plug-ins **406.** Once a new eThreat is detected it will activate the Signature builder **420** which will update the Known eThreat Handler **200** and the Collaborative eThreat Recognition **500** with the new signature. The Unknown eThreats processor **402** will also hold priorities for the suspicious files, enabling the expeditious analysis of the most dangerous files, which will be ranked highest in the priority-list file.
- All of the plug-ins have the same interface **406,** wherein a suspicious file is examined as input, and a threat rank is the output. The plug-ins maintain a private database for internal use and a public database that other plug-ins can use and relate to. The following list of plug-ins is extendible and can be changed according to future needs:
   . The Collaborative plug-in **408** detects new eThreats such as: Viruses, Worms, Trojan, Adware, Spam and Phishing. It receives data from the Collaborative eThreat Recognition module **500.**
   . The A.I. (Artificial Intelligence) plug-in **410** is actually a category of plug-ins. The aim of these plug-ins is to detect Viruses, Trojans, Spam and Worms by employing heuristic search, which is an emerging area in informed search under Artificial Intelligence. The informed search algorithms use knowledge in the process of searching for a goal. A goal may be a certain pattern in a file that may indicate an eThreat. The knowledge that will be used, while searching for a goal, may include structures or partial structures of extant eThreats that were recognized before initiating the search.
   . The Statistic Analysis plug-in **412** uses statistical analysis tools for detecting Spam. Emails that are machine-generated diverge in some of their properties from emails at large.
   . The Static Analysis plug-in **414** analyzes executables files to detect Viruses, Polymorphic Viruses, Worms, Trojans, Phishing and Spyware. The main idea of this plug-in is that an executable file can be analyzed before it has been executed in run time environment.
- The Risk-weighing component **416** provides a final rank for each eThreat file which was analyzed previously by all of the plug-ins. All plug-ins that receive a file for processing, provide a subjective numeric grade for the "danger" posed by the eThreat. The Risk-weighing module **416** collects all ranks from the relevant plug-ins and formulates a weighed rank, according to some weighing scheme. If a final rank of a file is beyond a devisable threshold, the file will be transferred to the Signature builder **420.**
- The Signature builder component **420** will construct a unique signature for each new eThreat the New eThreat Detection Module **400** has encountered. The new signature **422** will be transferred to the Unknown eThreats processor **402.**

The inputs of the New eThreat Detection Module **400** are:
- Files **320** to be examined;
- Data **24** gathered form the Collaborative eThreat Recognition Module **500**; and
- Data 20 from the Storage Manager **600.**

The outputs of the New eThreat Detection Module are:
- New eThreats signatures 422;
- Conflict resolution requests (sent indirectly via the Storage Manager **600**); and
- Storage Manager **600** updates **20.**

The Protection & Feedback Agent **700** is the only module of the system of the invention that is not under direct control of the NSP staff. It is directly controlled by the client. It is an optional software module that may run on the client's machine, being a standard PC, laptop, smart phone or any other portable device.

Some eThreats may be recognized most efficiently after execution, and only when they already reside on the target machine. Before the development of the system of the invention, the result of a client's machine becoming infected was only local loss. One of the purposes of the Protection & Feedback Agent **700** is to enable an entire community to gain from an individual client's losses.

The Protection & Feedback Agent **700** is optional as is the choice of which of its various functionalities should be enabled. A client may opt to not install it, and the system of the invention must take this possibility into account and be fully operational despite this constraint. Nevertheless, the underlying assumption connected with this module is that at least some of the clients will install it.

There are several distinct goals for the Protection & Feedback Agent:
- It collects information from the client's computer in order to analyze it and detect abnormal behavior that may indicate an eThreat infection;
- It allows the client to supply feedback about the systems performance in order to improve it and to supply feedback that will enter the weighting process in the Collaborative eThreat detection Module **500;** and
- It optionally serves as a privacy and security enhancing tool.

A schematic description of the Protection & Feedback Agent **700** is depicted in Fig. 7. Note that the Protection & Feedback Agent **700** is allowed to establish contact only with the Collaborative eThreat Detection Module **500.**

The following is a list of components comprising the Protection & Feedback Agent **700**:
- The Secure Network Connection component **104** is in charge of creating a secure connection **26** to the Collaborative eThreat Detection Module **500.** A full description of component **104** can be found hereinabove in the description of the Anonymity, Privacy & Secrecy Module **100.**
- The User Interface Configuration component **702** comprises a set of dialogs for setting and getting parameters that affect the behavior of the Agent **700.**
- The User Interface Feedback **704** comprises a form of Graphical User Interface (GUI) controls that allow the client to enter feedback 30 to the system. This feedback will be sent to the Collaborative eThreat Detection Module 500 for weighting and improvement of the detection capabilities of the system **10** of the invention. The User Interface Feedback component **704** enables the user to:
   . Mark an executable as a possible eThreat;
   . report about Spam or phishing attempts; and
   . suggest that the machine is not behaving normally and therefore is potentially infected. In this case all of the computer's state will be sent as input to the Collaborative eThreat Detection Module **500.**
- The User Interface Alerts component **706** is responsible for displaying alerts when some suspicious or potentially dangerous activity is active or is about to take place. Alerts should be un-obtrusive. Any type of alert can be either enabled or disabled in the User Interface Configuration component **702.**
- The Agent Control component **708** is responsible for making the Protection & Feedback Agent **700** function as planed. This component comprises the main routine of the module and synchronizes the activities of the various components.
- The Automatic Cleaning facility **710** is an optional component that allows the removal of eThreats which may have slipped in before the system **10** had a chance to recognize them.
- The Privacy monitor **712** is an optional component that is in charge of identification of attempts at transmitting private information. The main purpose of this module is to protect against phishing attempts.
- The Sniffers **714** are Multiple interfaces to the Operating system that allow automatic gathering of information about ongoing activities. This information is processed by the Agent Control **708** and sanitized before being sent to the Collaborative eThreat Detection Module **500.** The information will be used for automatic detection of new eThreats. The sniffer component **714** is responsible for monitoring the underlying platform and supplying data for further analysis. Sniffer types vary according to the collected information that includes:
   . process information;
   . network statistics;
   . memory usage
   . file system activity; and
   . registry access.
   Various sniffer types may be disabled by the configuration or via instructions from the Collaborative eThreat detection Module **500.** If a sniffer has been disabled by the configuration, it can not be activated remotely, while the opposite situation is allowed.

In Fig. 7, the arrows show the direction of information flow within the Agent **700,** i.e.: traffic **26',** configuration changes **28,** raw data **716,** alerts **718,** privacy alerts **720,** and cleaning commands **722.**

The inputs of the Protection & FeedBack Agent **700** are:
- Commands:
   . Requests for specific sniffed data
   . Automatic Software update commands
- Information:
   . eThreat Signature updates
   . Cleaning instructions.

The outputs of the Protection & FeedBack Agent **700** are:
- Sniffed Data. (After ensuring that no private information is included)
- Manual FeedBack. **30** (From the User Interface)
- Request for updates (since the Collaborative eThreat Detection Module **500** must not initiate the communication); and
- Automatic FeedBack.**32** (Based on the processed data gathered from the sniffers).

The main goal of the Collaborative eThreat Recognition Module **500** is to detect potential new eThreats by processing information received from various system agents and users. Generally speaking, each agent gathers information by monitoring the system or by using other techniques. This information contains various parameters such as: processes, CPU usage, registry access or modification, etc. For each kind of eThreat there is defined the information that an agent should gather that is related to the attributes of the threat. Some information may come directly from the user. For example, if a user concluded that some site is a phishing site, he or she can send this piece of information to the Collaborative eThreat Recognition Module **500.** For each kind of eThreat there is defined the information that a user can send and the formal protocol to be used. In this module no distinction is made between a report from a Protection & Feedback Agent **700** and a report from an end user **40.** Both are entries in a database maintained locally by the Collaborative eThreat Recognition Module **500** and/or in Storage Manager **600.** Each row in the database refers to an agent's ID and the columns hold the threat attributes.

Table 1 depicts an example of typical database maintaining the reports from the agents and maintained on the Storage Manager **600.** If the database is empty it means that there are no potential eThreats that were detected by the any agent or user. Alternatively, the attributes of potential eThreats are available for further processing. In the later case the Collaborative eThreat Recognition Module **500** tries to investigate these eThreats across multiple network segments in many different ways in order to generate the global view of what is happening. Such a view is assembled by aggregating data from multiple dispersed agents and by applying rule-based detection techniques (see description of the components of the module below). For example, as illustrated in Table 1, if some type of worm activates at some specific time, accesses the address book, and starts sending messages to some IP addresses, then aggregation performed on start-date and start-time will enable identification of a new worm (or other eThreat) that is only triggered at certain times. In this case, this module will send a message containing "A.exe", its treat level, and all its attributes to the New eThreat Detection Module **500.**

**TABLE 1**

| **Agent/User ID** | **Process Name** | **Ontology attribute 1 - Start Time** | **Attribute 2 - Sent IP Packets** | **Attribute 3 - Address book access** | | **Attribute n -CPU usage** |
|---|---|---|---|---|---|---|
| 1 | A.exe | 14:00:00:001 | 17 | YES | | |
| 1 | | | | | | |
| | | | | | | |
| 38 | A.exe | 14:00:00:001 | 74 | YES | | |
| 38 | | | | | | |
| | | | | | | |

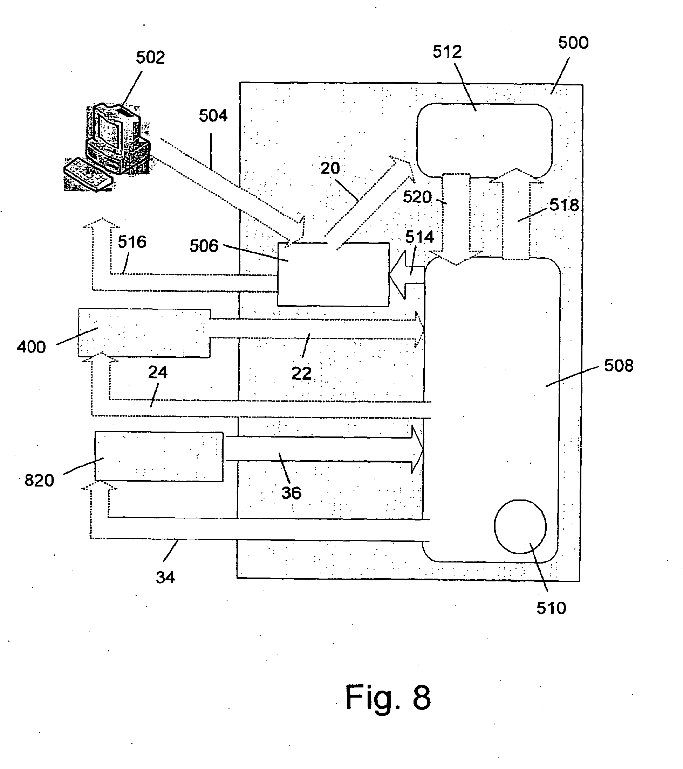

The overall architecture of the Collaborative eThreat Recognition Module **500** is shown in Fig. 8. This module includes Aggregation **512,** Analysis **508,** and Communication Interface **506** components.

The Analysis Component **508** is the main component of the Collaborative eThreat Recognition Module **500.** It is activated on a periodic basis (i.e., using a timer **510**) and performs the following two tasks:
- Matching predefined rules: Component **508** implements rule-based detection of abnormal behavior in order to find potential eThreat Candidates. For each type of eThreat a set of generalized rules that define abnormal behavior is provided. As an example, the possible rule for detection of the worm depicted in Table 1 is: "if some process wakes up at a specific time, accesses the Address Book, and starts to send IP packets - then this is a worm (provided that this behavior was exhibited in more then 3 computers". The initial set of rules and thresholds are defined in the setup phase. These rules are formed by analyzing a variety of patterns of known attacks that have occurred on the Internet. The system attempts to match the aggregated date **520** to the different rules. The aggregated data **520** is formed from the outputs **504** of the Agents **502** transmitted through communication interface **506** and accumulated in the system as stored information **20.** The matching is done by submitting requests **22** to the Aggregation component **512** and checking whether the answer is above a previously defined threshold. If some matches are found, i.e. if the rule support is greater than the threshold, then module **500** transfers all relevant information **24** to the New eThreat Detection Module **400** for further analysis.
   In the event of a partial match, i.e. the support is not very small, but is still lower than the threshold, module **500** can transfer all relevant information **34** to the handling of Expert Group Feedback Manager Module **820.**
   The request for the special aggregation, that is, to check some special rule may come directly from the Expert Group Feedback Manager Module **820** in order to get the bird's eye view of what is happening on the network.
- Generating new rules for eThreat detection: The drawback of the rule-based approach is that the basic rules are predefined, and cannot detect any novel attack. If a threat exhibits a behavior that is not prescribed by the existing rules, the threat can harm the system without being detected. In order to solve this problem the Collaborative eThreat Recognition Module **500** is automatically updated by identifying the offending stream of data or process by applying the association rules mining technique to the reports from different agents/users. There are two outputs of this task: new detection rules and identification of the processes/files that cause the bad conditions. Both of the outputs **24** and **514,516** will be sent to the New eThreat Detection Module **400** to the agents **502** respectively via Communication Interface **506.** The new rules can also be received **36** from the Expert Group Feedback Manager Module **820.**
   The task of generating new rules takes into account the different categories of users, e.g. home users and gamers that download many movies or music, versus business users who access stock market, news, etc., as well as different types of eThreats.
   If there is more than one instance of the analysis component in the system, then the queries are executed over a distributed network/database in a fast manner in order to receive an integrated view of the analysis outcome.

The Aggregation Component **512** receives requests **518** from the Analysis Component **508** and aggregates data by different fields in order to examine eThreats across multiple network segments in many different ways. Aggregating by date and time, for example, enables identification of new worms or eThreats that are only triggered at certain times; aggregating by attacker IP allows viewing of all the transition steps of an attacker's attempt across the multiple network segments, etc.
The input **518** for this component is a request for executing simple Structured Query Language (SQL) queries on the database of the agent's reports. For example, in order to check whether the rule "if some process activated at the same time in more then 3 computers (3 is the threshold), accesses the address book and then starts to send IP packets - this is a worm" occurs the Analysis component **508** will send to the Aggregation component **512** the following request:
select ProcessName from the database where EQUAL(StartTime) AND
AccessAddressBook=TRUE AND
SendIPpackets=TRUE.
The output is the number of such entries, and if needed the agent's ID, process name, etc

The implementation scheme of the Collaborative eThreat Recognition Module **500** can employ several approaches such as Association Rule Mining, Genetic Algorithms and Recommender System. However, more detailed algorithms, specifically tailored to the tasks of system 10 have been developed.

All input/output operations of the Collaborative eThreat Recognition Module 500 are implemented in the Communication Interface **506** which is a component handling communication with all Agents **700** in the system. Inputs include:
- Reports **504** from all agents and users: As pointed above, in this module there is no distinction between reports from Agents **700** and users **40.** Both are the entries in the database. For each kind of eThreat there is defined the information that agents/users should send. According to this information initial set of rules for matching the various eThreats are define.
- Special requests **22** from the New eThreat Detection Module **400:** One of the techniques employed in the New eThreat Detection Module **400** may make use of a summary of agent's reports. In this case New eThreat Detection Module **400** will send a request **22** to the Collaborative eThreat Recognition Module **500** in order to generate such a summary. Another type of request is to update **516** the agents with new detected eThreat information.
- New detection rules **36** from the Expert Group Feedback Manager Module **820**: The initial set of rules for each kind of eThreat will be defined during the setup phase. Nevertheless, module **500** will be able to obtain new detection rules from Expert Group Feedback Manager Module **820** and use them together with a previously defined set.
- New analysis techniques from the Expert Group Feedback Manager Module: In the first stage, module **500** detects candidates for new eThreats by using rule based detection only. However it is also possible to add new detection techniques (received from the Expert Group Feedback Manager Module **820**) in plug and play manner.
- Software updates for the agents **502** from the Expert Group Feedback Manager Module **820**: In order to update the agent's software, the Collaborative eThreat Recognition Module **500** will receive needed updates from the Expert Group Feedback Manager Module **820** and will distribute them to all known agents **502.**
- Requests for a bird's-eye view about what is occurring in the network received from the Expert Group Feedback Manager Module **820.**

Outputs of the Collaborative eThreat Recognition Module **500** include:
- Information **24** concerning potential threats is sent to the New eThreat Detection Module **400**: For each potential threat that has been detected, module **500** will send all relevant information to the New eThreat Detection Module for further analysis and signature building.
- Warnings and directives **516** to all agents **502**: For each potential eThreat that has been detected, module **500** will send warning messages and special commands to all known agents. For example, if module **400** concludes that executing the file "A.exe" will result in system crash, it will send, through module **500,** the command "Don't run A.exe" to all known agents. The formal protocol that contains the full set of the warnings and commands is defined in the design phase of system **10.**
- Configuration updates to all known agents: Introduction of new detection rules and new detection techniques by module **500** will result in a need to gather new information at the agent's level. In order to perform this task the Collaborative eThreat Recognition Module **500** will send the configuration update information **516** to all known agents **502.**
- Requests **34** to resolve special problems are forwarded, either directly or indirectly, to the Expert Group Feedback Manager Module **820.**
- Informational view of what is occurring on the network is sent to the Expert Group Feedback Manager Module **820.**

The Storage Manager Module **600** is the primary persistence device of the system of the invention. It has two major responsibilities. First, it is responsible for storing and managing files. Second, it is responsible for storing information about the files that it is managing, e.g. information from Collaborative eThreat Module **500,** plug-in information, plug-in decisions, eThreat signatures, etc.

Storage Manager Module maintains physical files that it stores in a logical storage. The logical storage is a hierarchical data structure. When Storage Manager **600** receives a new file from an initiator component, e.g. New eThreat Detection module **400,** it creates new entries in the logical storage. Then, it physically copies the file to its hard drive, and produces a FileID, which is a unique identification for the file. The FileID is stored in the logical storage and sent back to the initiator component. Among other pieces of information, the Storage Manager stores eThreat signatures. Given a FileID, supplied by another module of the system, Storage Manager is able to construct a group of similar FileIDs. This group of similar FileIDs is called 'close files' for the reason that all the files in the group are not semantically different. This functionality is very important to the creation of eThreat signatures. Upon new eThreat recognition, the Signature Builder component **420** is activated. It is assisted by the Storage Manager **600,** which produces the 'close files' group to create a signature. At the end of this process, the signature is stored in the Storage Manager **600** and the Known eThreat Handler module **200** and the Collaborative eThreat Recognition module **500** are also updated with the new signature.

The Storage Manager module **600** is not connected directly to the internet data stream and does not process information. The Storage Manager module **600** is connected only to the New eThreat Detection module **400** and Collaborative eThreat Recognition Module as shown in Fig. 1.

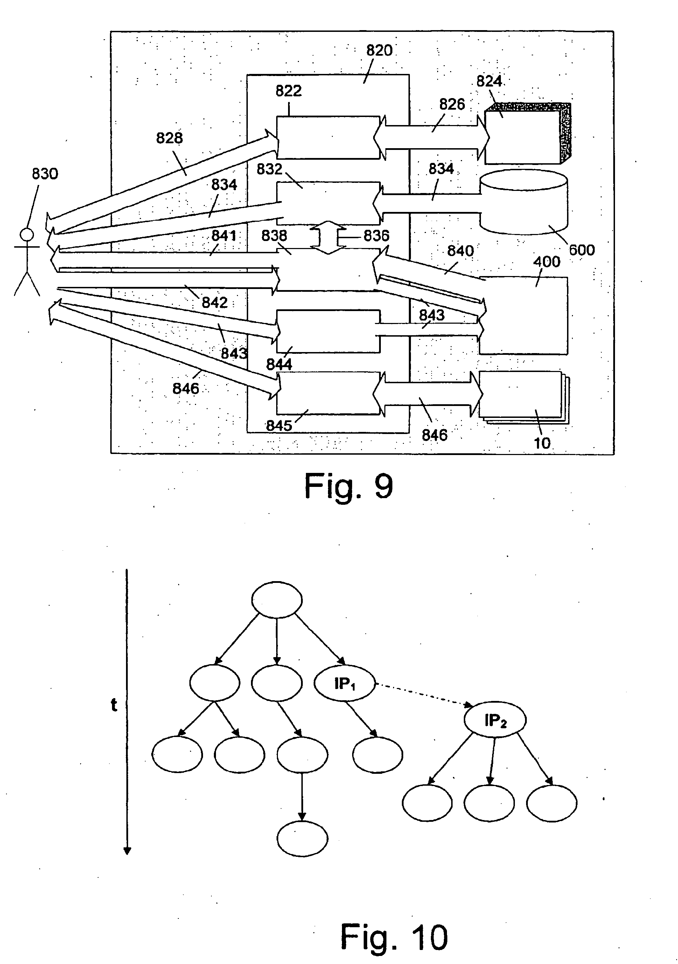

The Expert Group Feedback Manager Module **820** is part of the Control Center **800** of the system **10** of the invention. The main goal of the Expert Group Feedback Manager Module **820** is to provide a set of GUI dialogs, which will present all the relevant information for new eThreats' recognition. In order to discover new eThreats the basic match predefined rules have to be updated. This problem is solved by use of the Data Mining techniques such as Association Rules, Genetic Algorithms, etc, There are two outputs of this task: the new eThreats detection rules and the list of files or processes that support the new rules creation. This module supplies a panel of human experts with the ability to configure and monitor the modules of the system **10.** The architecture of the Expert Group Feedback Manager Module **820** is shown in Fig. 9.

The Expert Group Feedback Manager Module **820** conceptually is divided into the following five components: eTime Control & GUI **822,** Storage Manager Explorer **832,** Conflict Resolver **838,** Manual eThreats Loader **844,** and System Configuration Center **845.**

The eTime Control & GUI Component **822** provides a graphic interface allowing the experts group a way to monitor, control, and interact **826** with the eTime framework **824.** The eTime framework, which is described in Copending Patent Application IL173472 by the same applicant, the description of which, including publications referenced therein, is incorporated herein by reference, can analyze data collected from various sources, such as end-user devices, network element, network links etc., to identify potentially infected devices, files, sub-streams or network segments.

The Storage Manager Explorer **832,** Manual eThreats Loader **844,** and the Configuration Center **845** enable the panel of experts to monitor and configure various modules of the system **10** of the invention. The Conflict Resolver Component **838** is responsible for receiving alerts **840** from New eThreat Detection Module **400,** providing relevant information to handle it, and processing the expert's decision **842** regarding the potential eThreat that has triggered an alert.

The Conflict Resolver Component **838** receives alerts **840** from the New eThreat Detection Module **400** when the later module is unable to determine whether an examined file is or is not an eThreat. Component **838** also provides relevant information to help interpret the alert and to give the experts **830** a way to reply to this alert. Conflict Resolver Component **838** arranges all of the alerts in a priority queue with respect to the score given by New eThreat Detection Module **400** and the latency of the alert. At the time the experts respond to the alert, all the information **841** concerning the judgments of the New eThreat Detection Module **400** are presented and there is also provided a way to receive more information **836,** available at Storage Manager **600** via Storage Manager Explorer **832.**

The input of Conflict Resolver Component **838** consists of information about a suspicious eThreat **840,** including the score of the risk it poses that is provided by the New eThreat Detection Module **400,** all of the information requested via the Storage Manager Explorer **836,** and the expert's final decision regarding particular alert **842.** This component alerts **841** the experts that a new request has arrived and places it in the proper location in the priority queue. One method of determining the priority of the alert is with respect to the risk it poses and the time of arrival (to avoid a situation in which old alerts are overlooked because of new more important alerts). The output is a queue of available alerts and conflicts resolved.

The Manual eThreats Loader Component **844** provides a way for experts to insert new eThreat signatures **843** to the system **10** of the invention. The input of the Manual eThreats Loader **844** is eThreat file/s. This component forwards the eThreat to the New eThreat Detection Module **400** for signature construction and further handling.

The Storage Manager Explorer Component **832** is responsible for providing controlled read only access to the storage manager **600.** The following information could be presented:
- Risk assessment of specific known (by system 10) eThreats;
- Risk assessment of the NSP network;
- Current configuration properties of configurable system **10** components;
- Known eThreats' library;
- Decisions made by the New eThreat Detection Module **400;**
- Decisions made by Experts' Group **830** regarding potential eThreats;
- Statistical information may be gathered and released by the Known eThreat Handler Module **200;** and
- Reports released by the modules of system **10.**

The Storage Manager Explorer Component **832** identifies the requested information and presents it to the experts **830;** hence the output of the Storage Manager Explorer Component **832** is all the data described above.

The Configuration Center Component **845** is responsible for applying configuration settings **846** to the configurable system **10** modules. The input of Configuration Component **845** is configuration properties that should be applied.

Inputs of the Expert Group Feedback Manager Module **820** include:
- Information 828 for eTime Control & GUI Component **822.**
- Alerts on suspicious eThreats, which should be examined by experts **830:**
   . alert information: i.e., time triggered, source agent;
   . the body of an eThreat (the code/instance of a suspected eThreat); and
   . the scores by categories of a suspected eThreat provided by the New eThreat Detection Module **400.**
- Information **843** provided to the Manual eThreat Loader Component **844:**
   . full body (code/instance) of a new eThreat; and
   . every other piece of information, which is relevant for signature constructing.
- Requests from experts **830** for information **834** from the Storage Manager Explorer Component **832:**
   . requests for risk assessment of specific known (by system **10**) eThreats;
   . requests for risk assessment of the NSP network;
   . requests for current configuration properties of configurable system 10 components;
   . requests for the known eThreats' library;
   . request for decisions made by the New eThreat Detection Module **400;**
   . request for decisions made by the Experts Group **830** regarding an eThreat recognition;
   . requests for statistical information which optionally may be gathered and released by the Known eThreat Handler Module **200;** and
   . requests for reports released by the modules of system **10.**
- Configuration properties that should be applied to the modules of the system 10 of the invention and eTime.

Outputs of the Expert Group Feedback Manager Module **820** include:
- Output to the experts group **830:**
   - available alerts waiting for experts' response;
   - information regarding potential eThreats:
      ◆ information available after analysis by the New eThreat Detection Module **400** of suspicious code by various categories.
      ◆ information available at the Storage Manager **600** regarding suspicious eThreats (provided by various modules).
   - output to eTime **824;**
   - monitoring and configuration information of system **10:**
      ◆ current configurations of various modules of system **10;**
      ◆ default configurations of various modules of system **10;** and
      ◆ information on the activities of various modules of system **10.**
- Output to other modules of system **10:**
   - output **826** to the eTime framework **824;**
   - decisions **843** of the experts group 830 to the New eThreat Detection Module **400;**
   - bodies/instances of new eThreats sent to the New eThreat Detection Module **400** for signature construction; and
   - configuration properties applied to various modules of system **10.**

The purpose of the Attack Trace-Back module **850** is to help in tracing back the source of an eThreat. The module computes a subset of users/hosts that are suspected to be the source of an eThreat using the historical data on its propagation that has been collected.

Ideally the best way to perform trace-back requires that a log of all files going from each user/router/IP to each user/router/IP gathered in every machine in the network be maintained. Since this is not possible, the log used in the system of the invention contains at least the following data: Timestamp, File ID, Source IP, and destination IP.

To trace back an instance of an eThreat all records related to this eThreat are extracted from the log using its file ID. The following definitions enable the whole propagation tree of the eThreat to be constructed:
1. IP₁ is said to have "sent" an eThreat e' to IP₂ if the following record exists in the log: timestamp₁, e', IP₁, IP₂.
2. IP₁ is said to have "infected" IP₂ with an eThreat e' if:
   i. IP₁ "sent" e' to IP₂.
   ii. No one else "sent" e' to IP₂ previously and IP₂ didn't "send" e' to anyone else previously.
3. IP₁ is the "source "of an eThreat e' if he "sent" e' to someone else and no one else "infected" IP₁.

After constructing the propagation tree the source of the attack can be found by using these definitions. Since this requires a huge amount of resources only logs of some IPs are kept. To trace back an instance of an eThreat, all records containing this eThreat are extracted from the logs that are available using the file IDs. As a result of the fact that all logs are available, the constructed propagation tree will be incomplete and therefore can comprise several disconnected trees (see Fig. 10). In this case, the social network can be used to complete missing links. A missing link from IP₁ to IP₂ can be completed if:
1. There is a link from IP₁ to IP₂ in the social network.
2. The 'virtual' link is within the constraints of the time frame in which the eThreat spread.

Fig. 10 schematically shows the time-lined trees of the propagation of a file from IP₁ to IP₂ as listed in the logs that have been collected and made available to Attack Trace-Back module **850.** The dotted line doesn't appear in the logs but is complete it from information available relating to the social network if there is enough time between the timestamp in which IP₁ received the eThreat and the timestamp in which IP₂ sent the eThreat.

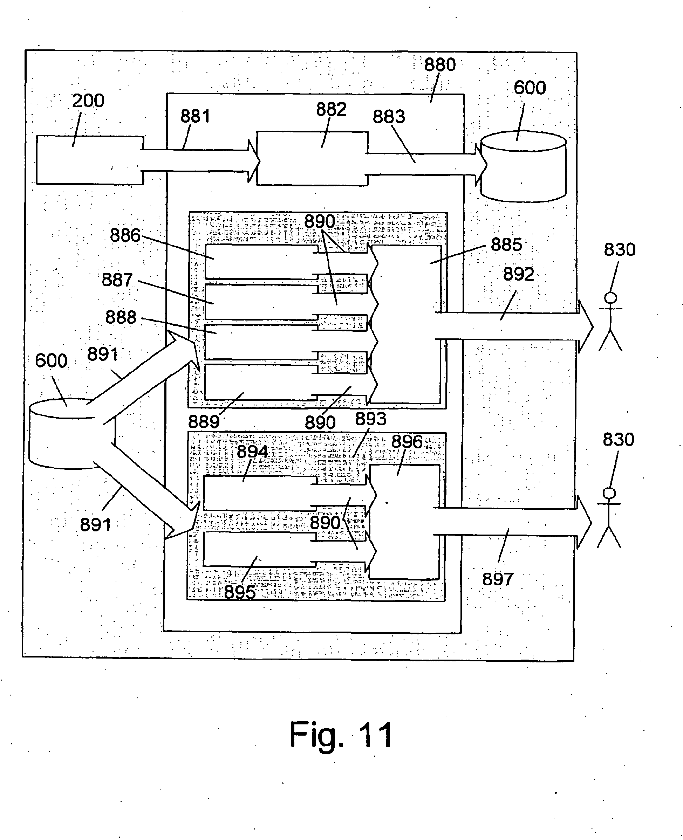

The Risk Assessment Module **880** is a part of the system Control Center **800.** The main goal of the Risk assessment Module is to measure the risk of a specific eThreat and also the risk of all known (by system 10) eThreats over the NSP network. The components of this module collect relevant information for risk assessment from the Storage Manager **600** and provide risk assessments to the experts group **830** via the Experts Group Feedback Manager Module **820.** The conceptual architecture of the Risk Assessment Module **880** is presented in Fig. 11.

The Risk Assessment Module **880** is conceptually divided into three components: Data Analyzing and Summarizing Component **882,** Particular Risk Measurement Component **884,** and the Net Risk Measurement Component **893.** Each of these components is designed and implemented with flexibility in mind to allow modifications of the criteria and techniques applied for risk assessment.

The Data Analyzing and Summarizing Component **882** is responsible for collecting the statistical information **881** released by the Known eThreats Handler Module **200,** detecting and summarizing the relevant information **883** (for various criteria), and storing it in the Storage Manager **600** for further risk assessments. The input **881** to the Data Analyzing and Summarizing Component **882** consists of all the statistical information released by the Known eThreats Handler Module **200,** e.g.: the portion of malicious traffic within the total traffic; the number of instances filtered for each known eThreat, etc. This component analyzes the input data and detects relevant information for all criteria presented in the Particular Risk Measurement Component **884** and the Net Risk Measurement Component **893.** Next, the information is accumulated and summarized before storing it in the Storage Manager **600.** The output of the Data Analyzing and Summarizing Component **882** is therefore summarized data, which is relevant for the criteria, presented in the Particular Risk Measurement Component **884** and Net Risk Measurement Component **893.** The summarized data is stored in the Storage Manager **600** on a periodical basis, as predefined by the group of experts **830** or according to some default configuration of the system **10.** Once a risk assessment is requested, the most up-to-date information in the Storage Manager **600** will be used.

The Particular Risk Measurement Component **884** is responsible for measuring the risk of a particular known eThreat, i.e. an eThreat that is known to the system **10.** The Particular Risk Measurement Component **884** is composed of various criteria **886-889,** which can be modified and appended, and an Overall Severity Component **885.** Component **885** provides an overall severity measure **892** of particular eThreats based on predefined criteria. Each criterion component **886-889** is responsible for requesting relevant information **891** from the Storage Manager **600,** for processing the information, for generating a score **890** for the particular aspect of risk for the given criterion and sending the criterion score **890** to the Overall Severity Component **885.** The input **891** to the Particular Risk Measurement Component **884** consists of various data relevant for risk assessment as defined by the criteria, and the relevancy of information is defined by criteria components composing the Particular Risk Measurement Component **884.**

Many different criteria can be used to measure the risks of eThreats. For example, the present embodiment of the Particular Risk Measurement Component **884** of the Risk Assessment Module **880** employs four criteria:
- The Abundance over the net criterion **886** measures the potential risk of an eThreat based on the number of times it is identified over the ISP network. The input to this criterion is an amount (e.g. number of instances) of this eThreat filtered by the Known eThreat Handler Module **200** over a specified recent time period. This information is released by the Known eThreat Handler Module **200** and summarized and later stored by the Data Analyzing and Summarizing Component **882.**
- The distribution rate criterion **887** measures the potential risk of an eThreat based on its distribution rate. The input to this criterion consists of quantity measurements of this eThreat as filtered by the Known eThreat Handler Module **200** over recent time periods. Additional input for this component is the duration that a particular eThreat has been known to system **10,** since the distribution rate must be considered over time. As the duration of time that such information is collected for this eThreat grows, system **10** gradually becomes more familiar with the eThreat and the precision of this criterion's measurement increases.
- The damage measure criterion **888** measures the risk of an eThreat based on its potential to inflict damage to the infected system or user, thus the input of this component consists of the measurement of potential damage that a given eThreat may cause. This information is measured by the New eThreat Detection Module **400** at the time it recognizes a new or suspicious eThreat and is made available in the Storage Manager **600.**
- The target system criterion **889** measures the potential risk of an eThreat based on the number of occurrences of the targeted system that this eThreat may infect or run on, thus the input of this module is the abundance of the targeted system on the network. The targeted system is identified by the New eThreat Detection Module **400** at the time it recognizes a new or suspicious eThreat and the identification is made available to the Storage Manager **600.** The abundance of the targeted system is provided by the Collaborative eThreat Recognition Module **500** based on information provided by the Protection & Feedback Agents **700** which is made available from the Storage Manager **600.**

Each criterion module **886-889** provides its quantitative assessment **890** in the form of a risk score and a relative weight of the precision of the score. The Overall Severity Component **885** processes all the provided risk scores **890** assigned by the various criteria components **886-889** and calculates the overall risk assessment **892,** which is provided to the group of experts **830** via the Experts Group Feedback Manager Module **820.**

The Net Risk Measurement Component **893** is responsible for measuring the potential risk to the ISP network caused by known (to the system **10**) eThreats. The design of the Net Risk Measurement Component **893** is very similar to that of the Particular Risk Measurement Component **884.** It comprises various criteria **894-895** that can be modified at any time and an Overall Severity Component **896.** Component **893** provides an overall severity score **897** of risk over the ISP network based on the defined criteria. Each criterion component **894-895** has been developed in a very similar manner to that of the criterion components **886-889** of the Particular Risk Measurement Component **884.** The input **891** to the Net Risk Measurement Component **893** consists of various data relevant for risk assessment by the defined criteria, wherein the relevancy of information is defined by the criterion components.

The present embodiment of the Risk Assessment Module comprises two criteria:
- The malicious traffic portion criterion **894** measures a potential eThreat risk based on the relative portion of the traffic that has been filtered by the Known eThreats Handler Module **200** during the recent time period. Its input is data regarding the portion of the ISP network traffic identified as malicious and filtered-out by the Known eThreat Handler Module **200** over the recent time period. This information is collected by the Known eThreat Handler Module **200** and stored in the Data Analyzing and Summarizing Component **882.**
- The user's feedback criterion **895** measures a potential eThreat risk based on feedbacks from users **40** or Protection and Feedback Agents **700.** Its input consists of an average rating of the level of protection and risk to system **10** as reported over the recent time period by clients **40** or by Agents **700** installed on their local systems. This information is provided by the Collaborative eThreat Recognition Module **500** made available in the Storage Manager **600.**

Each criterion module **894-895** provides its score and the relative weight of its score's precision. The Overall Severity Component **896** processes all the scores **890** provided by the various criteria components and calculates the overall risk assessment **897,** which is provided to the experts group **830** via the Experts Group Feedback Manager Module **820.** Thus, the output of this component is an assessment of risk over the entire NSP network.

The Inputs of the Risk Assessment Module **880** include:
- Statistical information **881** released by the Known eThreats Handler Module **200:**
   . The part of malicious traffic that was filtered out by the Known eThreat Handler Module **200;** and
   . The number of instances of each particular eThreat that was filtered by the Known eThreat Handler Module **200.**
- Statistical information, which is stored by the Risk Assessment Module **880:**
   . The number of instances of a particular eThreat filtered by the Known eThreat Handler Module **200** over a recent time period; and
   . The average portion of malicious traffic, which was filtered by the Known eThreat Handler Module, from the ISP network traffic over a recent time period.
- The interval of time that a given eThreat has been known to system **10.**
- The measurement of potential damage that a given eThreat may inflict.
- The total numbers of the system targeted by a given eThreat.
- The average rating of system protection and risk over the network as reported by the ISP clients **40** or by Agents **700** installed on their systems.

The outputs of the Risk Assessment Module **880** include:
- Risk Assessment **892** of a given eThreat (known by the system **10**).
- Risk Assessment **897** of the ISP network, based on known (by the system **10**) eThreats over the network.

Although embodiments of the invention have been described by way of illustration, it will be understood that the invention may be carried out with many variations, modifications, and adaptations, without exceeding the scope of the claims. In particular, art skilled persons will be able to distinguish between the conceptual architecture of the system of the invention and the physical architecture, which can be implemented in many different ways.

### Bibliography

1. Symantec Internet Security Threat Report, January-June, 2004. www.symantec.com.
2. Yegneswaran, V., Barford, P., and Ullrich, J. (2003) Internet intrusions: global characteristics and prevalence. SIGMETRICS 2003, pp. 138-147.
3. Leverhugen, R. Trends, codes and virus attacks - 2003 year, in review. Network Security, Jan 2004.
4. Cuppens, F. and Miege, A. Alert correlation in a cooperative intrusion detection framework. In Proceedings of IEEE Symposium on Security and Privacy 2002.
5. Zenkin, D. Guidelines for the Protecting the Corporate against Viruses. Computers & Security, 20 (2001), pp. 671-675.
7. Bloedorn, E. et al. Data Mining for Network Intrusion Detection: How to Get Started, MITRE Technical Report, August 2001.
8. Eskin, E., Arnold, A., Prerau, M., Portnoy, L., Stolfo, S. A Geometric Framework for Unsupervised Anomaly Detection: Detecting Intrusions in Unlabeled Data, Data Mining for Security Applications, Kluwer 2002.
9. Ertoz, L., Eilertson, E., Lazarevic, A., Tan, P., Srivastava, J., Kumar, V., Dokas, P., The MINDS - Minnesota Intrusion Detection System, Next Generation Data Mining, MIT Press, 2004.
10. Ertoz, L., Eilertson, E., Lazarevic, A., Tan, P., Dokas, P, Srivastava, J., Kumar, V. Detection and Summarization of Novel Network Attacks Using Data Mining.
11. Madhusudan, B., Lockwood, J. Design of a System for Real-TimeWorm Detection. Published in 12th Annual IEEE Symposium on High Performance Interconnects (Hot-I), August, 2004, Stanford, CA, pp. 77-83.
12. Mitzenmacher, M. Compressed Bloom filters. Networking IEEE/ACM Transactions Volume: 10 , Issue: 5 , Oct. 2002 pp.604 - 612.
13. Attig, M., Dharmapurikar, S. and Lockwood, J. Implementation Results of Bloom Filters for String Matching, In Proceedings of: IEEE Symposium on Field-Programmable Custom Computing Machines (FCCM), Napa, CA, April 20-23, 2004. 15. Verwoerd, T., Hunt, R. Intruision detection techniques and approaches. Computer Communication, 25, 2002, 1356-1365.
16. Neubauer, B.J., Harris, J.D. Protection of computer system from computer viruses: ethical and practical issues. Consortium for Computing Sciences in Colleges, Rocky Mountain Conference, 2002.
17. Lockwood, J., Moscola, J., Reddick, D., Kulig, M. and Brooks, T. Application of hardware accelerated extensible network nodes for internet worm and virus protection. In International Working Conference on Active Networks (IWAN), (Kyoto, Japan), Dec. 2003.
18. Lockwood, J., Moscola, J., Reddick, D., Kulig, M. and Brooks, T. Internet Worm and Virus Protection in Dynamically Reconfigurable Hardware. MAPLD 2003, September 2003, paper E10. http://www.arl.wustl.edu/arl/projects/fpx
19. Lockwood, W. Evolvable Internet Hardware Platforms. Evolvable Hardware Workshop, Long Beach, CA, USA, July 12-14, 2001, pp. 271-279.
20. Sidhu, R. and Prasanna,V. K. Fast Regular Expression Matching using FPGAs. Field-Programmable Custom Computing Machines (FCCM), Rohnert Park, CA, USA, Apr. 2001.
21. Lockwood, J., Naufel, N., Turner, J. and Taylor, D. Reprogrammable network packet processing on the field programmable port extender (fpx). In ACM International Symposium on Field Programmable Gate Arrays (FPGA '2001), (Monterey, CA), pp. 87-93, Feb. 2001.
22. Jung, J., Schechter, St. and Berger, A. Fast Detection of Scanning Worm Infections. Seventh International Symposium on Recent Advances in Intrusion Detection (RAID), Sophia Antipolis, French Riviera, France. Sept. 15-17,2004
23. Bakos, G. and Berk, V. Early detection of internet worm activity by metering ICMP destination unreachable messages. In Proceedings of the SPIE Aerosense, 2002.
24. Berk, V., Bakos, G. and Morris, R. Designing a framework for active worm detection on global networks. In Proceedings of the IEEE International Workshop on Information Assurance, March 2003.
25. Liljenstam, M., Nicol, D., Berk, V., Gray, R. Simulating Realistic Network Worm Traffic for Worm Warning System Design and Testing, WORM'03, Washington, DC, USA, October 27, 2003.
26. Kanlayasiri, U., Sanguanpong, S. and Jaratmanachot, W. A Rule-based Approach for Port Scanning Detection". Applied Network Research Group*.*
27. Kephart, J., Chess, D. and White, S. Computers and Epidemiology. IEEE Spectrum, 1993.
28. Christodorescu, M., Jha, S. Static Analysis of Executables to Detect Malicious Patterns, working paper, Computer Sciences Department University of Wisconsin, Madis*on*
29. Larochelle, D., Evans, D. Statically Detecting Likely Buffer Overflow Vulnerabilities, Feb, 2003.
30. Kephart, J. and White, S. Measuring and Modeling Computer Virus Prevalence. In Proceedings of the IEEE Symposimum on Security and Privacy 1993.
31. Wang, H., Guo, Ch., Simon, D. and Zugenmaier, A. Shield: Vulnerability-Driven Network Filters for Preventing Known Vulnerability Exploits, SIGCOMM'04, Portland, Oregon, USA. Aug. 30-Sept. 3, 2004.
32. Microsoft Corp. URLScan Security Tool. http://www.microsoft.com/technet/security/ URLScan.asp.
33. Iheagwara, C., "The effect of intrusion detection management methods on the return on investment" , Computers and Security, May 2004.
34. Cranor, L., Resnick, P. and Gallo, D.A Catalog of Tools that Support Parents' Ability to Choose Online Content. America Links Up, September 1998.
35. Zou, C., Gao, L., Gong, W. and Towsley, D. Monitoring and Early Warning for Internet Worms. In 10th ACM Symposium on Computer and Communication Security, Washington DC, 2003.

## Claims

1. A computer system(10)that provides early warning detection and response to electronic threats in a large wide area network, said system comprising:
a) a virtual Anonymity, Privacy, and Secrecy APS module (100) comprised of several components distributed throughout said system, said APS module (**100**) comprising components that are adapted to identify and remove data carrying personal information and to enable secure encrypted communications between modules in said system, thereby insuring that the anonymity, privacy and secrecy of all users of said large wide area network are preserved while enabling said system to perform.
its function;
b) one or more physical Known eThreat Handler KEHM modules (**200**) that are deployed inside said large wide area network, said KEHM modules (**200**) comprising components (204) that are adapted to look for a match between signatures of known eThreats and the stream of Internet packets (**12**) in real-time, thereby identifying and removing known eThreats from data stream (**12**)
c) one or more physical Data Stream Manager DSM modules (**300**) that are deployed inside said large wide area network, said DSM modules (**300**) comprising components that are adapted to:
i) receive the data stream (**14**) that has been forwarded from said KEHM modules (**200**);
ii) forward said data stream (**14**) to the target computer (**38**);
iii) extract files from said data steam (**14**) by filtering out traffic (**14'**) that has no potential to assist with eThreat detection and traffic (**306**) that has a potential to assist with detection of new eThreats;
d) a physical New eThreat Detection module (**400**) not directly connected to the large wide area network data stream, said module (**400**) comprising:
i) a plurality of detection plug-ins (**408,410,412,414,**) each of which is adapted to analyze and provide a subjective numeric grade for the danger posed by the suspected eThreat in a file (**16**) or a file from other sources;
ii) a risk weighing component (**416**) that is adapted to combine the numeric grades provided by said plurality of detection plug-ins to provide a final rank for each of said eThreat files in order to determine if a new eThreat has been detected; and
iii) components that are adapted to constrict a unique signature for each new eThreat detected;
e) a physical Collaborative eThreat Recognition module (**500**) mot directly connected to said large wide area network data stream, said
Collaborative eThreat Recognition module (**500**) comprising: components that are adapted to apply rule-based detection techniques to information received from various system agents and users to detect potential new eThreats;
f) a physical Storage Manager module (**600**) not connected directly to said large wide area network data stream, said Storage Manager module (**600**) comprising components that are adapted to:
i) store and manage files sent to said module (**600**) by other modules of said system; and
ii) store information about said files managed by said module (**600**);
g) a physical Control Center module (**800**) not connected directly to said large wide area network data stream, which comprises graphic user interfaces and other components that are adapted to provide all information gathered by other modules of said system that is relevant to the recognition of new eThreats to a human expert group that is responsible for running said system and to provide feedback from said human expert group to modules of said system; and
h) communication links between said modules of said system.

2. A computer system according to claim 1, wherein the large wide area network is the network of an Internet Services Provider ISP or a Network Services Provider, NSP.

3. A computer system according to claim 2, wherein all of the modules of said system comprise means that are adapted to be controlled by the staff of the large wide area network.

4. A computer system according to claim 1 comprising a computer executable application (**700**) installed on the end-user machines, said application (**700**) adapted to monitor the behavior of running processes in said end-user machines and to report suspicious behavior to Collaborative eThreats Recognition module (**500**).

5. A computer system according to claim 1, wherein Control Center module (**800**) comprises a component that traces back the source of an threat using historical data on its propagation that has been collected by the modules of said system.

6. A computer system according to claim 1, comprising detection plug-ins that are adapted to be added to or removed from New eThreat Detection module (**400**) thereby adding or removing detection capabilities to/from said system.

## Patentansprüche

1. Computersystem (10), das ein frühes Warnen, Erkennen und Reagieren auf elektronische Bedrohungen in einem großen Weitbereichsnetz bereitstellt, das System aufweisend:
a) ein virtuelles Anonymität, Privatsphäre und Geheimheitsmodul APS (100) aufweisend mehrere über das System verteilte Komponenten, das APS-Modul (100) aufweisend Komponenten, die zum Identifizieren und Entfernen von Daten, die persönliche Informationen transportieren, und zum ermöglichen sicherer verschlüsselter Kommunikationen zwischen Modulen in dem System ausgeführt sind, und dabei sicherstellt dass die Anonymität, Privatsphäre and Geheimheit von allen Nutzern des großen Weitbereichsnetzes bewahrt sind während es dem System ermöglicht ist, seine Funktion durchzuführen;
b) eines oder mehrere physikalische Module (200) zum Behandeln bekannter eThreats KEHM, die innerhalb des großen Weitbereichsnetzes eingesetzt sind, die KEHM Module (200) aufweisend Komponenten (204), die ausgeführt sind, nach einer Übereinstimmung zwischen Signaturen von bekannten eThreats und dem Strom von Internetpaketen (12) in Echtzeit zu suchen, und dabei bekannte eThreats identifiziert und aus dem Datenstrom (12) entfernt werden;
c) eines oder mehrere physikalische Module zum Verwalten des Datenstroms DSM (300), die innerhalb des großen Weitbereichsnetzes eingesetzt sind, die DSM Module (300) aufweisend Komponenten, die ausgeführt sind zum:
i) Empfangen des Datenstroms (14), der von den KEHM Modulen (200) weitergeleitet wurde;
ii) Weiterleiten des Datenstroms (14) zu dem Zielcomputer (38);
iii) Extrahieren von Dateien aus dem Datenstrom (14) durch Ausfiltern von Verkehr (14'), der kein Potenzial zum unterstützen bei der eThreat-Erkennung hat und von Verkehr (306), der ein Potenzial zum unterstützen bei der Erkennung von neuen eThreats hat;
d) ein physikalisches Modul (400) zum Erkennen neuer eThreats, das nicht unmittelbar mit dem großen Weitbereichsnetzdatenstrom verbunden ist, das Modul (400) aufweisend:
i) eine Vielzahl von Erkennungs Plug-Ins (408, 410, 412, 414), von denen jedes aufgerührt ist, einen subjektiven numerischen Grad für die Gefahr, die von dem vermutlichen eThreat in einer Datei (16) oder in einer Datei aus einer anderen Quelle dargestellt ist, zu analysieren und bereitzustellen;
ii) eine Risikoabwägungskomponente (416), die ausgeführt ist, den numerischen Grad, der von der Vielzahl von Erkennungs Plug-Ins bereitgestellt ist, zu kombinieren, um einen abschließenden Rang für jede der eThreat Dateien bereitzustellen um zu bestimmen, ob ein neuer eThreat erkannt wurde; und
iii) Komponenten, die ausgeführt sind, eine eindeutige Signatur für jeden neu erkannten eThreat zu erstellen;
e) ein physikalisches Modul (500) zum kollaborativen Erkennen von eThreats, das nicht unmittelbar mit dem großen Weitbereichsnetzdatenstrom verbunden ist, das Modul (500) zum kollaborativen Erkennen von eThreats aufweisend Komponenten, die ausgeführt sind, regelbasierte Erkennungstechniken auf Informationen anzuwenden, die von verschiedenen Systemagenten und Nutzern empfangen sind, um potentielle neue eThreats zu erkennen;
f) ein physikalisches Modul (600) zum Verwalten eines Speichers, das nicht unmittelbar mit dem großen Weitbereichsnetzwerkdatenstrom verbunden ist, das Modul (600) zum Verwalten des Speichers aufweisend Komponenten, die ausgeführt sind zum:
i) Speichern und Verwalten von Dateien, die zu dem Modul (600) von anderen Modulen des Systems gesendet wurden; und
ii) Speichern von Informationen über die Dateien, die von dem Modul (600) verwaltet sind;
g) ein physikalisches Kontrollcentermodul (800), das nicht unmittelbar mit dem großen Weitbereichsnetzdatenstrom verbunden ist, das graphische Nutzerschnittstellen und andere Komponenten aufweist, die ausgeführt sind, alle Informationen, die von anderen Modulen des Systems gesammelt wurden und die für das Erkennen von neuen eThreats relevant sind, einer Humanexpertengruppe, die für das Betreiben des Systems verantwortlich ist, bereitzustellen und Rückmeldungen von der Humanexpertengruppe an die Module des Systems bereitzustellen; und
h) Kommunikationsverbindungen zwischen den Modulen des Systems.

2. Computersystem nach Anspruch 1,
wobei das große Weitbereichsnetzwerk das Netzwerk eines Intemetdiensteanbieters ISP oder eines Netzwerkdiensteanbieters NSP ist.

3. Computersystem nach Anspruch 2,
wobei alle Module des Systems Mittel aufweisen, die ausgeführt sind, von der Belegschaft des großen Weitbereichsnetzwerkes gesteuert zu werden.

4. Computersystem nach Anspruch 1,
aufweisend eine computerausführbare Anwendung (700), die auf der Endbenutzermaschine installiert ist, wobei die Anwendung (700) ausgeführt ist, das Verhalten von laufenden Prozessen in der Endbenutzermaschine zu überwachen und verdächtiges Verhalten an das Modul (500) zum kollaborativen Erkennen von eThreats zu melden.

5. Computersystem nach Anspruch 1,
wobei das Kontrollcentermodul (800) eine Komponente aufweist, die die Quelle eines eThreats unter Nutzung historischer Daten von seiner Verbreitung zurückverfolgt, wobei die historischen Daten von den Modulen des Systems gesammelten worden sind.

6. Computersystem nach Anspruch 1,
aufweisend Erkennungs Plug-Ins, die ausgeführt sind, zu dem Modul (400) zum Erkennen neuer eThreats hinzugefügt zu werden oder von diesem entfernt zu werden, wodurch dem System Erkennungsfähigkeiten hinzugefügt werden oder von ihm entfernt werden.

## Revendications

1. Système informatique (10) qui assure une détection d'avertissement précoce et une réponse à des menaces électroniques dans un grand réseau étendu, ledit système comportant :
a) un module virtuel d'anonymat, de confidentialité et de secret, APS, (100) constitué de plusieurs composants répartis dans tout ledit système, ledit module APS (100) comportant des composants qui sont adaptés pour identifier et retirer des données transportant des informations personnelles et pour permettre des communications cryptées sécurisées entre des modules dans ledit système, en garantissant ainsi que l'anonymat, la confidentialité et le secret de tous les utilisateurs dudit grand réseau étendu sont préservés tout en permettant audit système de remplir sa fonction,
b) un ou plusieurs modules physiques de gestion de menaces électroniques connues, KEHM, (200) qui sont déployés à l'intérieur dudit grand réseau étendu, lesdits modules KEHM (200) comportant des composants (204) qui sont adaptés pour rechercher une correspondance entre des signatures de menaces électroniques connues et le flux de paquets Internet (12) en temps réel, en identifiant ainsi et en retirant des menaces électroniques connues du flux de données (12),
c) un ou plusieurs modules physiques de gestion de flux de données, DSM, (300) qui sont déployés à l'intérieur dudit grand réseau étendu, lesdits modules DSM (300) comportant des composants qui sont adaptés pour :
i) recevoir le flux de données (14) qui a été transféré à partir desdits modules KEHM (200),
ii) transférer ledit flux de données (14) à l'ordinateur cible (38),
iii) extraire des fichiers dudit flux de données (14) en filtrant un trafic (14') qui n'a pas le potentiel d'aider à la détection de menaces électroniques et un trafic (306) qui a le potentiel d'aider à la détection de nouvelles menaces électroniques,
d) un module physique de détection de nouvelles menaces électroniques (400) non directement connecté au flux de données du grand réseau étendu, ledit module (400) comportant :
i) une pluralité de modules d'extension de détection (408, 410, 412, 414) dont chacun est adapté pour analyser et fournir un niveau numérique subjectif pour le danger présenté par la menace électronique suspectée dans un fichier (16) ou un fichier provenant d'autres sources,
ii) un composant de pondération du risque (416) qui est adapté pour combiner les niveaux numériques fournis par ladite pluralité de modules d'extension de détection pour fournir un classement final pour chacun desdits fichiers de menace électronique afin de déterminer si une nouvelle menace électronique a été détectée,
et
iii) des composants qui sont adaptés pour construire une signature unique pour chaque nouvelle menace électronique détectée,
e) un module physique de reconnaissance collaborative de menaces électroniques (500) non directement connecté audit flux de données du grand réseau étendu, ledit module de reconnaissance collaborative de menaces électroniques (500) comportant des composants qui sont adaptés pour appliquer des techniques de détection à base de règles à des informations reçues de différents agents et utilisateurs du système pour détecter de nouvelles menaces électroniques potentielles,
f) un module physique de gestion et de stockage (600) non directement connecté audit flux de données du grand réseau étendu, ledit module de gestion de stockage (600) comportant des composants qui sont adaptés pour :
i) stocker et gérer des fichiers envoyés audit module (600) par d'autres modules dudit système, et
ii) stocker des informations concernant lesdits fichiers gérés par ledit module (600),
g) un module physique (800) de centre de commande non directement connecté audit flux de données du grand réseau étendu, lequel comporte des interfaces utilisateurs graphiques et d'autres composants qui sont adaptés pour fournir toutes les informations collectées par d'autres modules dudit système qui sont pertinentes pour la reconnaissance de nouvelles menaces électroniques, à un groupe d'experts humains qui est responsable de l'exécution dudit système et pour fournir un retour d'information dudit groupe d'experts humains à des modules dudit système, et
h) des liaisons de communication entre lesdits modules dudit système.

2. Système informatique selon la revendication 1, dans lequel le grand réseau étendu est le réseau d'un fournisseur de services Internet, ISP, ou d'un fournisseur de services de réseau, NSP.

3. Système informatique selon la revendication 2, dans lequel tous les modules dudit système comportent des moyens qui sont adaptés pour être commandés par le personnel du grand réseau étendu.

4. Système informatique selon la revendication 1, comportant une application exécutable par un ordinateur (700) installée sur les machines d'utilisateurs finaux, ladite application (700) étant adaptée pour surveiller le comportement de processus en cours d'exécution dans lesdites machines d'utilisateurs finaux et pour signaler un comportement suspect à un module de reconnaissance collaborative de menaces électroniques (500).

5. Système informatique selon la revendication 1, dans lequel le module de centre de commande (800) comporte un composant qui retrace la source d'une menace électronique en utilisant des données historiques sur sa propagation qui ont été collectées par les modules dudit système.

6. Système informatique selon la revendication 1, comportant des modules d'extension de détection qui sont adaptés pour être ajoutés au module de détection de nouvelles menaces électroniques (400) ou pour être retirés de celui-ci, en ajoutant ainsi des capacités de détection audit système ou en en enlevant de celui-ci.
